# EUROPÄISCHE PATENTSCHRIFT

(11) **EP 3 953 231 B1**
(45) Veröffentlichungstag und Bekanntmachung des Hinweises auf die Patenterteilung: **04.06.2025**
(21) Anmeldenummer: 20719383.0
(22) Anmeldetag: 09.04.2020
(51) Int. Cl.: B61G 5/02, B60D 5/00

(54) **GELENKVORRICHTUNG FÜR EIN GELENKFAHRZEUG UND GELENKFAHRZEUG**
ARTICULATION ASSEMBLY FOR AN ARTICULATED VEHICLE AND ARTICULATED VEHICLE
ARTICULATION POUR VEHICULE ARTICULE ET VEHICULE ARTICULE

(30) Priorität: 11.04.2019 DE 102019109611
(43) Veröffentlichungstag der Anmeldung: 16.02.2022
(73) Patentinhaber: Bombardier Transportation GmbH, 10785 Berlin (DE)
(72) Erfinder: WOLLENDORFER, Reinhard, 1030 Wien (DE)
(74) Vertreter: Zimmermann & Partner Patentanwälte mbB
(86) Internationale Anmeldenummer: PCT/EP2020/060248
(87) Internationale Veröffentlichungsnummer: WO 2020/208183

(56) Entgegenhaltungen:
- WO-A1-2017/092462
- CN-A- 107 458 406
- CN-U- 204 801 812
- JP-A- 2008 238 999

## Beschreibung

### Technisches Gebiet

Die vorliegende Erfindung betrifft eine Gelenkvorrichtung zum flexiblen Verbinden von Wagenkästen eines Gelenkfahrzeugs. Weiterhin betrifft die Erfindung ein Gelenkfahrzeug mit mehreren Wagenkästen, wobei die Wagenkästen mittels der eingangs angeführten Gelenkvorrichtung miteinander verbunden sind.

### Vorbekannter Stand der Technik

Allgemein bekannt sind Gelenkfahrzeuge, zum Beispiel mehrgliedrige Gelenkbusse oder schienengebundene Fahrzeuge des öffentlichen Personenverkehrs, wie zum Beispiel Straßenbahnen. Die Gelenkvorrichtungen zum Verbinden der Wagenkästen solcher mehrgliedrigen Fahrzeuge sind dabei so ausgebildet, dass die einzelnen Glieder des Fahrzeugs in einem zulässigen statischen und dynamischen Zustand miteinander verbunden sind.

Die EP 1647 462 A1 offenbart ein Fahrzeug zur Personenbeförderung und weist mehrere durch Gelenkverbindungen gekoppelte Wagenkästen auf. Die Gelenkverbindungen sind als Schwenklager ausgebildet und lassen bei Kurvenfahrt Drehbewegungen der Wagenkästen um die Hochachse zu. Zumindest eine der Schwenklager ist im oberen Fahrzeugbereich in Fahrzeugquerrichtung verschiebbar an einem der Wagenkästen angeschlossen und ermöglicht dadurch auch Wankbewegungen der Wagenkästen zueinander um die Längsachse des Fahrzeugs.

Das in der EP 3 028 919 A1 angeführte Gelenk eines Gelenkfahrzeugs dient dazu, Wagenkästen eines Gelenkfahrzeugs elastisch miteinander zu verbinden, wobei nicht nur zwischen den Gelenksegmenten Nick-, Wank- und Knickbewegungen übertragen werden sollen, sondern auch Aufsattellasten und Abhebelasten aufgenommen werden können.
Die CN 107 458 406 A betrifft ein Verfahren zur Einrichtung eines Drehgelenkes in einem Niederflurfahrzeug und ein Verfahren zur Kraftübertragung, insbesondere des Torsionswiderstandes und der Zugkraft im Drehgelenk. In WO 2017/092462 A1 ist eine Gelenkverbindung für ein Fahrzeug und ein derartiges Schienenfahrzeug beschrieben. CN 204 801 812 U betrifft Gelenkverbindungen von Schienenfahrzeugen zur Reduzierung von Nickbewegungen zwischen zwei benachbarten Wagen.

### Nachteile des Standes der Technik

Die bisher bekannten Lösungen zeigen nur ausreichend zufriedenstellende Anwendungscharakteristika, sind jedoch mindestens entweder sehr komplex aufgebaut oder gestatten keine effektive Kopplung bzw. Entkopplung von Relativbewegungen einzelner Wagenkästen.

### Problemstellung

Aufgabe der vorliegenden Erfindung ist es daher, eine Gelenkvorrichtung bereitzustellen, welche einen einfachen und robusten Aufbau aufweist und sich durch eine konstruktionsbezogen günstige Verbindung von Wagenkästen eines Gelenkfahrzeugs auszeichnet.

### Erfindungsgemäße Lösung

Die obige Aufgabe wird durch eine Gelenkvorrichtung nach Anspruch 1 oder Anspruch 2, und durch ein Gelenkfahrzeug nach Anspruch 14 gelöst. Weitere Ausführungsformen der genannten Gegenstände ergeben sich aus den abhängigen Unteransprüchen und zusätzlich diskutierten Ausführungsformen.

Die Gelenkvorrichtung setzt sich mindestens aus einem Zentrallager, zwei Basislagern und aus zwei Schenkeln zusammen, wobei beide Schenkel am Zentrallager befestigt sind und/oder jeweils ein Ende eines Schenkels mit einem anderen Ende des anderen Schenkels am Zentrallager zusammengeführt wird.

Ein jeweils anderes Ende eines jeweiligen Schenkels ist mit jeweils einem Basislager verbunden. Entsprechend bilden die Schenkel eine Dreieckslenkerverbindung zwischen dem Zentrallager und den beiden Basislagern und/oder zwischen den Wagenkästen des Gelenkfahrzeugs.

Die Basislager und/oder das Zentrallager können mindestens dreiteilig ausgebildet sein, aufweisend einen Lagerabschnitt, einen Stützabschnitt und zwischen dem Lagerabschnitt und dem Stützabschnitt angeordnete Abstützmittel. Ein Lagerabschnitt definiert sich mindestens dadurch, dass ein Ende eines Schenkels daran befestigt werden kann. Der Stützabschnitt ist jeweils dazu ausgebildet, unmittelbar oder mittelbar an einem Wagenkasten des Gelenkfahrzeugs befestigt werden zu können. Die Kraftübertragung zwischen Lagerabschnitt und Stützabschnitt kann über die flexiblen Abstützmittel erfolgen.

Insbesondere kann/können ein Basislager und/oder das Zentrallager in Form einer Bolzen-Hülsen-Konstruktion gestaltet sein, wobei ein bolzenähnliches Bauteil beispielsweise als Lagerabschnitt fungiert, der radial von einem flexiblen Abstützmittel zumindest teilweise umgeben ist, welches wiederum zumindest teilweise von einem Hülsen-ähnlichen Bauteil, insbesondere dem Stützabschnitt umgriffen wird.

Beispielsweise kann der Lagerabschnitt bolzenförmig ausgebildet und zumindest teilweise von den Abstützmitteln umgeben sein. Dabei kann der Stützabschnitt Abstützmittel und den bolzenförmigen Lagerabschnitt radial in sich aufnehmen und mit dem Wagenkasten verbindbar sein. Der bolzenförmige Lagerabschnitt kann ähnlich einer Kolben-Pleuelstangen-Verbindung mit einem Schenkel, möglicherweise drehfest, verbunden sein.

Zum gesamtkontextuellen Verständnis der vorliegenden Patentanmeldung werden eine Längsrichtung, eine horizontal verlaufende, senkrecht zur Längsrichtung ausgerichtete Querrichtung und eine dazu senkrecht verlaufende Vertikalrichtung definiert, die sich auf einen Wagenkasten und/oder das gesamte Gelenkfahrzeug beziehen. Wird eine solche Richtungsangabe im Zusammenhang mit der Gelenkvorrichtung oder mit Komponenten davon verwendet, so ist ein Bezug auf eine bestimmungsgemäße Montageposition der Gelenkvorrichtung zwischen den Wagenkästen des bestimmungsgemäß eingesetzten Gelenkfahrzeugs vorhanden. Der bestimmungsgemäße Einsatz des Gelenkfahrzeugs kann so definiert werden, dass das Gelenkfahrzeug auf einer ebenen, horizontalen und geraden Fläche, beispielsweise auf einer Fahrbahn oder auf Schienen, positioniert ist.

Weiterhin wird für jeden Schenkel eine immanente Schenkelrichtung definiert, die in einer Längserstreckung eines jeweiligen Schenkels verläuft. Ein jeder Schenkel weist somit eine eigene Schenkelrichtung auf. Insbesondere ist die Schenkelrichtung identisch mit der Ausrichtung einer geraden Verbindungslinie beider Montagepunkte an den beiden Enden eines jeweiligen Schenkels.

In montiertem Zustand der Gelenkvorrichtung ist das entsprechend befestigbar ausgebildete Zentrallager an einem ersten Wagenkasten der zu verbindenden Wagenkästen angeordnet. Die beiden Basislager sind mittelbar oder unmittelbar mit dem zweiten Wagenkasten verbindbar ausgestaltet oder verbunden. Insbesondere kann dabei eine Basiseinrichtung zum Einsatz kommen, welche eine konstruktive Verbindung der Basislager mit dem zweiten Wagenkasten derart manifestiert, dass beide Basislager mit einem Basisabstand zueinander beabstandet am zweiten Wagenkasten befestigbar oder befestigt sind. Der Basisabstand ist vorzugsweise in einer ersten Richtung oder in Querrichtung des Gelenkfahrzeugs ausgerichtet. Im zweiten Fall ist die erste Richtung gleich mit der Querrichtung.

Die Basiseinrichtung kann dabei gegenständlich ausgebildet sein und eine mittelbare Verbindung zwischen den Stützabschnitten der Basislager und dem Wagenkasten herstellen. Insbesondere kann die Basiseinrichtung als Teil der Gelenkvorrichtung angesehen werden. In einem solchen Fall, könnten die Stützabschnitte der Basislager an die Basiseinrichtung montiert werden oder diese könnten gemeinschaftlich mit der Basiseinrichtung ausgebildet sein. Der Basisabstand ergibt sich aus der Art der Anordnung der Stützabschnitte an oder mit der Basiseinrichtung.

Auch ist denkbar, dass die Basiseinrichtung allein durch Funktionalität definiert wird und keine eigene körperliche Gestalt aufweist. Beispielsweise ist die Basiseinrichtung als Befestigungseinrichtung an dem Wagenkasten ausgebildet, beispielsweise als Gewinde zur Montage der Stützabschnitte der Basislager.

Mindestens ein Basislager oder beide Basislager, insbesondere die Abstützmittel, sind dabei so ausgebildet und/oder deren Werkstoffe derart ausgewählt, sodass Lagerabschnitt und Stützabschnitt zueinander eine erzwungene Relativbewegung ausführen können. Entsprechend sind Lagerabschnitt und Stützabschnitt im Rahmen einer Steifigkeit flexibel zueinander angeordnet. Insbesondere kann das Basislager als flexibles Festlager verstanden werden.

Eine interne Steifigkeit beschreibt die Steifigkeit relativ zwischen Lagerabschnitt und Stützabschnitt eines Lagers.

Gemäß einer Ausführungsform ist mindestens ein Basislager und/oder Komponenten davon so gestaltet und Werkstoffe derart ausgewählt, sodass eine interne Steifigkeit eines Basislagers in mindestens einer Schenkelrichtung des zum Basislager zugehörigen Schenkels zumindest in einem quasi-linearen Steifigkeitsbereich mindestens 2 kN/mm, insbesondere mindestens 3 kN/mm, bevorzugt mindestens 4 kN/mm und maximal 7 kN/mm, insbesondere maximal 6 kN/mm, bevorzugt maximal 5 kN/mm beträgt. Bevorzugt ist das Basislager derart ausgebildet, sodass sich der quasi-lineare Steifigkeitsbereich, ausgehend von einem unbelasteten Zustand des Basislagers, über etwa 2/3 des Gesamtspiels des Basislagers erstreckt.

Alternativ oder zusätzlich zu einer oder mehreren der voran beschriebenen Ausführungsformen können Abstützmittel zwischen Lagerabschnitt und Stützabschnitt eines Basislagers derart angeordnet und ausgebildet sein, und mindestens ein Schenkel, bevorzugt zwei Schenkel, bezüglich der Schenkellänge derart konzipiert sein, sodass eine interne Steifigkeit eines Basislagers in mindestens einer Schenkelrichtung des zum Basislager zugehörigen Schenkels zumindest in einem quasi-linearen Steifigkeitsbereich mindestens 4 N/mm, insbesondere mindestens 6 N/mm, bevorzugt 8 N/mm, pro einem Millimeter Schenkellänge (4), und maximal 20 N/mm, insbesondere 18 N/mm, bevorzugt 16 N/mm, pro einem Millimeter Schenkellänge (4) beträgt. Mithilfe dieses relativen Maßes ,interne Steifigkeit pro Millimeter Schenkellänge' kann die Erfindung, insbesondere die Gestalt des effektiven Dreieckslenkers inklusive flexibler Lagerung, besonders präzise und umfassend beschrieben werden, denn es wird gelehrt, die interne Steifigkeit eines Basislagers in Abhängigkeit einer Schenkellänge mindestens eines Schenkels, insbesondere beider Schenkel zu gestalten.

Weiterhin, auch unabhängig vom voran Gesagten, kann ein Basislager so gestaltet sein, dass der Wert der internen Steifigkeit ab ca. 2/3 des Gesamtspiels zunimmt. Das Basislager kann folglich mit einer progressiven internen Steifigkeit ausgebildet sein.

Beispielsweise kann die interne Steifigkeit in einem letzten Drittel des Gesamtspiels des Basislagers, ausgehend von einem unbelasteten Zustand des Basislagers, mindestens 4 kN/mm, insbesondere mindestens 6 kN/mm, bevorzugt mindestens 8 kN/mm und maximal 14 kN/mm, insbesondere maximal 12 kN/mm, bevorzugt maximal 10 kN/mm betragen.

Im Zuge einer zusätzlichen oder alternativen Ausführungsform wird offenbart, dass der Basisabstand und eine effektive Lenkerlänge zwischen Zentrallager und dem Basisabstand derart ausgewählt sind, insbesondere durch entsprechende geometrische Ausgestaltung der Basiseinrichtung, eines Lagerabschnitts eines Lagers oder der Lager, und/oder eines oder beider Schenkel, sodass eine Gesamtsteifigkeit zwischen dem Lagerabschnitt des Zentrallagers und einem Stützabschnitt eines Basislagers in der Querrichtung maximal 30%, insbesondere maximal 20%, bevorzugt maximal 12% einer internen Steifigkeit eines der Basislager beträgt. Dies wird erreicht, indem die geometrische Ausgestaltung des Dreieckslenkers mindestens eine interne Steifigkeit eines Basislagers in Schenkelrichtung in Querrichtung übersetzt.

Die Gesamtsteifigkeit des Lagerabschnitts des Zentrallagers beschreibt eine Flexibilität des Lagerabschnitts des Zentrallagers bezüglich des die Basislager tragenden zweiten Wagenkastens und/oder bezüglich der Basiseinrichtung.

Gemäß einer Ausführungsform bestimmen der Basisabstand und der dazu senkrecht verlaufende Lenkerabstand das oben angeführte Verhältnis von Gesamtsteifigkeit des Zentrallagers zu interner Steifigkeit des Basislagers.

Gemäß einer Ausführungsform kann ein Verhältnis von Lenkerlänge zu Basisabstand mindestens 4:1, insbesondere mindestens 5:1, bevorzugt mindestens 6:1, und maximal 12:1, insbesondere maximal 10:1, bevorzugt maximal 8:1 betragen, wobei diese Verhältnisse als unabhängige Lehre zu den im voranstehenden Absatz genannten Prozentangaben verstanden werden können.

Zusätzlich oder unabhängig von dem Vorangestellten sind die Abstützmittel eines Basislagers, beider Basislager und/oder ein oder beide derart ausgebildet, dass eine Gesamtsteifigkeit des Lagerabschnitts des Zentrallagers bezüglich der Basiseinrichtung, des zweiten Wagenkastens und/oder der Stützabschnitte der Basislager in Querrichtung mindestens 300 N/mm, insbesondere mindestens 400 N/mm, bevorzugt mindestens 480 N/mm und maximal 700N/mm, insbesondere maximal 600 N/mm, bevorzugt maximal 520 N/mm beträgt.

Auf diese Weise wird erstmalig erreicht, dass Wankbewegungen der Wagenkästen zueinander mithilfe der Gelenkvorrichtung effektiv kompensiert werden können. Es wird vermieden, dass eine Wankbewegung eines Wagenkastens über die Gelenkvorrichtung in den anderen Wagenkasten eingetragen wird und zu unerwünschten Querkräften führt. Somit findet eine geeignete Entkopplung der Wagenkästen in Querrichtung statt, wobei eine gezielte Wahl und/oder Einstellbarkeit der Gesamtsteifigkeit zwischen den Wagen dazu beiträgt, eine schädliche Übertragung einer Wankbewegung eines Wagenkastens auf einen anderen Wagenkasten zu verhindern. Gleichzeitig kann sichergestellt werden, dass eine Gesamtsteifigkeit der Gelenkvorrichtung in Längsrichtung um ein Vielfaches höher ist, als die resultierende Gesamtsteifigkeit am Zentrallager in Querrichtung.

Unabhängig oder zusätzlich zu einer oder mehreren der voran diskutierten Ausführungsformen kann die Gelenkvorrichtung, insbesondere mindestens ein Schenkel, die Schenkel, das Zentrallager, die Basiseinrichtung, mindestens ein Basislager und/oder die Basislager derart konzipiert oder dafür eingerichtet sein, dass bei einem montierten Schenkel eine effektive Lenkerlänge zwischen Zentrallager und dem Basisabstand und/oder eine effektive Schenkellänge einstellbar ist. Beispielsweise ist denkbar, dass ein Stützabschnitt mit einem einstellbaren Abstand am Wagenkasten montiert werden kann, wobei insbesondere die den Stützabschnitt tragende Basiseinrichtung und/oder auch eine Einstelleinrichtung an einem Schenkel einen variierenden Montageabstand ermöglichen kann. Auf diese Weise wird erstmals ermöglicht, dass die Geometrie des Dreieckslenkers zwischen den Wagenkästen angepasst werden kann, beispielsweise um Fertigungstoleranzen der Wagenkästen auszugleichen und/oder um eine Gesamtsteifigkeit des Dreieckslenkers am Lagerabschnitt des Zentrallagers bezüglich des zweiten Wagenkastens einstellen zu können.

Gemäß einer Ausführungsform einer einstellbaren Gelenkvorrichtung weist mindestens ein Schenkel, bevorzugt beide Schenkel, eine Einstelleinrichtung mit Gewindemitteln zum Einstellen der Lenkerlänge auf. Die Gewindemittel können in Schenkelrichtung ausgerichtet sein, sodass ein Abstand zwischen den Enden eines Schenkels durch Drehung eines Einstellelements verändert werden kann. Weiterhin können Sicherungselemente, zum Beispiel geeignete Kontermuttern, vorgesehen sein, die eine unerwünschte Veränderung der Einstelleinrichtung verhindern.

Gemäß einer weiteren Ausführungsform sind beide Schenkel der Gelenkvorrichtung, insbesondere bei gleicher Einstellung der Einstelleinrichtung, gleich lang, bevorzugt identisch, ausgebildet. Somit erhält der Dreieckslenker die Grundform eines gleichschenkligen Dreiecks, wodurch Kräfte und sonstige Anwendungscharakteristika symmetrisch ausgebildet werden. Dies führt zu einer Vereinfachung der Konstruktion und Montage.

In Erweiterung des Grundprinzips wird vorgeschlagen, eine Basiseinstelleinrichtung zum Einstellen des Basisabstands vorzusehen. Damit wird erreicht, dass über den Basisabstand die Gesamtsteifigkeit des Lagerabschnitts des Zentrallagers in Querrichtung beeinflusst werden kann, und/oder dass Fertigungstoleranzen des entsprechenden Wagenkastens und/oder der Basiseinrichtung kompensiert werden können.

Weiterhin ist denkbar, dass die Basiseinstelleinrichtung an der Basiseinrichtung angeordnet ist, und in Querrichtung unterschiedlich beabstandete Montagepunkte für einen Stützabschnitt eines Basislagers bereitstellt. Gemäß einer Ausführungsform könnte dazu mindestens ein in Querrichtung ausgerichtetes Langloch in der Struktur des Wagenkastens, in der Basiseinrichtung selbst und/oder im Stützabschnitt eines Basislagers vorgesehen sein, sodass mindestens ein Basislager in unterschiedlichen Positionen am Wagenkasten befestigt werden kann.

Im Sinne einer weiteren Ausführungsform wird vorgeschlagen, das Zentrallager und flexible Abstützmittel des Zentrallagers derart ausgebildet sind, sodass eine interne Steifigkeit des Zentrallagers einer ersten Richtung, insbesondere in Querrichtung, zumindest in einem quasi-linearen Steifigkeitsbereich, beispielsweise 2/3 eines Gesamtspiels, mindestens 2 kN/mm, insbesondere mindestens 3 kN/mm, bevorzugt mindestens 4 kN/mm und maximal 7 kN/mm, insbesondere maximal 6 kN/mm, bevorzugt maximal 5 kN/mm beträgt.

Insbesondere kann die interne Steifigkeit des Zentrallagers in Querrichtung gleich einer internen Steifigkeit eines Basislagers in Schenkelrichtung sein. Auf diese Weise kann die Komplexität der Konstruktion der Gelenkvorrichtung und Beschaffungskosten verringert werden.

Gemäß einer Ausführungsform ist das Zentrallager so ausgebildet, dass eine interne Steifigkeit des Zentrallagers mindestens in der zweiten Richtung oder in Längsrichtung, zumindest in einem quasi-linearen Steifigkeitsbereich, mindestens 12 kN/mm, insbesondere mindestens 15 kN/mm, bevorzugt mindestens 17 kN/mm beträgt. Insbesondere beträgt eine interne Steifigkeit des Zentrallagers. Auf diese Weise wird erreicht, insbesondere in Kombination einer oder mehreren der voranstehenden Ausführungsformen, dass die Wagenkästen in Längsrichtung ausreichend steif verbunden sind und Relativbewegungen in Längsrichtung, insbesondere im Gegensatz zu Relativbewegungen in Querrichtung oder eine Wankbewegung, nicht zugelassen werden.

Gemäß einer Ausführungsform ist das Zentrallager ähnlich einem Kugelgelenklager ausgebildet. Im Gegensatz zu einer beispielhaften Bolzen-Hülsen-Ausgestaltung der Basislager gestattet ein, insbesondere als flexibles Festlager gestaltetes, Kugelgelenkslager eine höhere, insbesondere widerstandsbehaftete, Flexibilität in zwei Dimensionen. Dies führt vorteilhaft dazu, dass unterschiedliche Positionen der Wagenkästen um eine Querachse - beispielsweise wenn das Gelenkfahrzeug über eine Kuppe oder durch eine Mulde fährt - zielgerichtet durch das Zentrallager aufgenommen und toleriert werden. Entsprechend können die Lager der Gelenkvorrichtung lastorientiert dimensioniert werden.

Gemäß einer Ausführungsform ist mindestens ein Lager der Gelenkvorrichtung, insbesondere ein Basislager oder beide Basislager derart konstruktiv gestaltet, sodass eine interne Steifigkeit in der ersten Richtung unterschiedlich zu einer internen Steifigkeit in einer zweiten Richtung. Insbesondere ist eine interne Steifigkeit in Querrichtung kleiner als eine interne Steifigkeit in Längsrichtung. Diese Maßnahme dient dazu, Relativbewegung von Wagenkästen in Längsrichtung im Gegensatz zu einer Wankbewegung möglichst nicht zuzulassen.

Erfindungsgemäß ist mindestens ein Basislager, bevorzugt beide Basislager, mit einem internen Spiel ausgestattet. Gemäß einer Ausführungsform ist auch das Zentrallager mit einem internen Spiel ausgestattet. Dies bedeutet, dass zwischen den Lagerpartnern eine Relativbewegung, insbesondere unter Überwindung einer durch flexible Abstützmittel bereitgestellte Widerstandskraft, ermöglicht wird. Insbesondere wird das Spiel durch das Zusammenwirken eines Anschlags an dem Lagerabschnitt und eines Anschlags an dem Stützabschnitt begrenzt.

Gemäß einer spezifischen Ausgestaltung kann ein solches Spiel mindestens 0,5 mm, insbesondere mindestens 1 mm, bevorzugt mindestens 1,5 mm, und maximal 6 mm, insbesondere maximal 5 mm, bevorzugt maximal 4 mm betragen. Entsprechende Untersuchungen haben gezeigt, dass ein solches Spiel eine optimale relative Wankbewegung zwischen den Wagenkästen gestattet.

Erfindungsgemäß sind ein Basislager, insbesondere beide Basislager, so ausgebildet, dass ein erstes Spiel in der ersten Richtung oder in Querrichtung und ein in der zweiten Richtung oder in Längsrichtung ausgerichtetes zweites Spiel unterschiedliche Beträge aufweisen. Gemäß einer zusätzlichen Ausgestaltung ist das Zentrallager auch so ausgebildet, dass ein erstes Spiel in der ersten Richtung oder in Querrichtung und ein in der zweiten Richtung oder in Längsrichtung ausgerichtetes zweites Spiel unterschiedliche Beträge aufweisen. Dies hat zur Folge, dass eine Relativbewegung von den Wagenkästen in Längsrichtung anders zugelassen und begrenzt wird als eine relative Wankbewegung in Querrichtung.

Beispielsweise kann dabei das erste Spiel mindestens 0,5 mm, insbesondere mindestens 1 mm, bevorzugt mindestens 1,5 mm, und maximal 6 mm, insbesondere maximal 5 mm, bevorzugt maximal 4 mm beträgt.

Auch ist denkbar, dass das zweite Spiel mindestens 0,75 mm, insbesondere mindestens 1 mm, bevorzugt mindestens 1,25 mm, und maximal 2,25 mm, insbesondere maximal 2 mm, bevorzugt maximal 1,75 mm betragen.

Gemäß einer Ausführungsform ist das Gelenkfahrzeug und/oder die Gelenkvorrichtung, insbesondere die Dreieckslenkerverbindung, die Basislager und das Zentrallager derart ausgebildet, sodass die Gelenkvorrichtung zwischen den Wagenkästen in Längsrichtung ein Gesamtspiel von mindestens 1,5 mm, insbesondere mindestens 2 mm, bevorzugt mindestens 2,5 mm, und maximal 4,5 mm, insbesondere maximal 4 mm, bevorzugt maximal 3,5 mm beträgt.

Das Gesamtspiel kann sich beispielsweise aus einer Addition des Spiels eines Basislagers und des Zentrallagers in Längsrichtung ergeben, wobei mögliche unerwünschte weitere Spiele, zum Beispiel eingespielte von Befestigungseinrichtungen an den Wagenkästen hierbei nicht zu berücksichtigen sind.

Weiterhin ist denkbar, dass beide Basislager baugleich ausgeführt sind, insbesondere um Herstellungs- und Beschaffungskosten zu senken.

Gemäß einer Ausführungsform ist das Gelenkfahrzeug derart ausgebildet, sodass eine Gelenkvorrichtung gemäß einer oder mehreren der voranstehenden Ausführungsformen in einem oberen Bereich, insbesondere in einem Dachbereich, der Wagenkästen des Gelenkfahrzeugs angeordnet ist. Insbesondere kann der Dachbereich ca. 20% der Gesamthöhe eines Wagenkastens - ausgehend von einer Maximalhöhe - betragen.

Gemäß einer weiteren Ausführungsform können die Wagenkästen des Gelenkfahrzeugs in einem Unterbodenbereich mithilfe einer unteren Verbindungsgelenkvorrichtung miteinander verbunden sein, wobei der Unterbodenbereich 20 % einer Gesamthöhe des Wagenkastens betragen kann. Eine solche Verbindungsgelenkvorrichtung ist unterschiedlich von der Gelenkvorrichtung gemäß einer der vorangestellten Ansprüche ausgebildet und dient primär dazu, um Zug und Druckkräfte zwischen den Wagenkästen zu übertragen. Insbesondere ist nicht vorgesehen relative Wankbewegungen oder Querbewegungen zwischen den Wagenkästen mittels der Verbindungsgelenkvorrichtung ausgleichen zu können.

Das Gelenkfahrzeug kann gemäß einer Ausführungsform mit mindestens einer Nicklagervorrichtung ausgestattet sein, insbesondere wenn das Gelenkfahrzeug aus mehr als drei Wagenkästen zusammengesetzt ist. Eins solche Nicklagervorrichtung dient dazu, relative Kippbewegungen der Wagenkästen zueinander um eine Querachse ausgleichen zu können und ist vorzugsweise in einem Dachbereich angeordnet.

Die voranstehenden beschriebenen Ausführungsformen können beliebig, jedoch insbesondere aus Sicht des Fachmanns in sinnhafter Weise miteinander kombiniert werden, beispielsweise indem bei einem Gelenkfahrzeug mit mehr als zwei Wagenkästen eine Verbindung im Dachbereich zwischen zwei Wagenkästen mit einer Gelenkvorrichtung gemäß einer oder mehreren der voranstehenden Ausführungsformen ausgestaltet ist, und eine andere Verbindung im Dachbereich zwischen zwei Wagenkästen mithilfe einer Nicklagervorrichtung realisiert ist.

### Kurzbeschreibung der Figuren

Die beiliegenden Zeichnungen veranschaulichen Ausführungsformen und dienen zusammen mit der Beschreibung der Erläuterung der Prinzipien der Erfindung. Die Elemente der Zeichnungen sind relativ zueinander und nicht notwendigerweise maßstabsgetreu.

Gleiche Bezugszeichen bezeichnen entsprechend ähnliche Teile.
Fig. 1 zeigt ein Gelenkfahrzeug 100 bestehend aus mehreren Wagenkästen 104, 105,
Fig. 2 ist eine schematische Darstellung einer Verbindung der Wagenkästen 104, 105 gemäß Fig. 1 mittels einer Gelenkvorrichtung 1,
Fig. 3 zeigt in schematischer Weise ein mögliches dynamisches Verhalten der Wagenkästen 104, 105 gemäß Fig. 1,
Fig. 4 ist eine prinzipielle Darstellung der Gelenkvorrichtung 1 gemäß Fig. 2 und 3,
Fig. 5 zeigt einen vertikalen Schnitt durch ein Basislager 20 der Gelenkvorrichtung gemäß Fig. 4,
Fig. 6 ist ein Horizontalschnitt A-A durch das Basislager 20 gemäß Fig. 5, und
Fig. 7 verdeutlicht den Steifigkeitsverlauf eines Basislagers 20 in Schenkelrichtung 3 in Längsrichtung 101.

### Ausführungsbeispiele

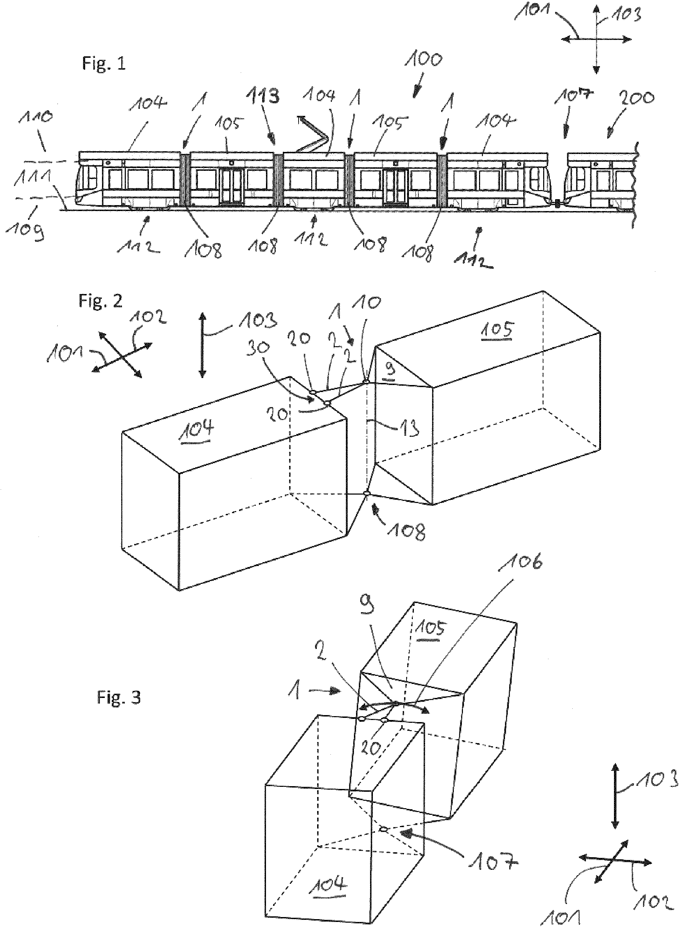

Zur Verdeutlichung des Gesamtzusammenhangs wird in Fig. 1 ein beispielhaftes Gelenkfahrzeug 100 dargestellt. Dieses umfasst wie gezeigt fünf Wagenkästen in der Reihenfolge 104-105-104-105-104. Ein weiteres Gelenkfahrzeug 200 ist mittels einer Kupplungsvorrichtung 107 mit dem Gelenkfahrzeug 100 verbunden, sodass beide Gelenkfahrzeuge 100 und 200 einen Zugverband bilden. Dieser Zugverband ist im vorliegenden Ausführungsbeispiel als eine auf Schienen 111 geführte Straßenbahn gestaltet. Die voranstehenden und nachfolgenden Ausführungsformen können mit entsprechender Anpassung auf andere Gelenkfahrzeuge, wie zum Beispiel Gelenkbusse, angewendet werden.

Die Wagenkästen 104 des Gelenkfahrzeugs 100 sind jeweils mit einem Drehgestell 112 ausgestattet und tragen die dazwischen angeordneten Wagenkästen 105. Dazu sind in einem Unterbodenbereich 109 die Wagenkästen 104 und 105 verbindende Verbindungsgelenkvorrichtungen 108 vorgesehen. Diese leiten eine Gewichtskraft der getragenen Wagenkästen 105 auf die Wagenkästen 104 und über die Drehgestelle 112 in die Schiene 111 ab. Weiterhin erfüllen die Verbindungsgelenkvorrichtungen 108 die Aufgabe, Zug- und Schubkräfte zwischen den Wagenkästen 104 und 105 zumindest teilweise zu übertragen.

Das Gelenkfahrzeug 100 befindet sich in Fig. 1 in einer bestimmungsgemäßen Position. Dabei ist das Gelenkfahrzeug 100 im Wesentlichen horizontal auf horizontal verlaufenden Schienen 111 ausgerichtet. Entsprechend wird eine Längsrichtung 101, eine Querrichtung 102 und eine Vertikalrichtung 103 des Gelenkfahrzeugs 100 definiert.

Im Dachbereich 110 des Gelenkfahrzeugs 100 sind Gelenkvorrichtungen 1 und eine Nicklagervorrichtung 113 zum Herstellen einer Verbindung der Wagenkästen 104 und 105 angeordnet. Im Gegensatz zu den Gelenkvorrichtungen 1 ist die Nicklagervorrichtung 113 in der Lage eine Relativbewegung von Wagenkästen 104 und 105 in Längsrichtung 101 zu kompensieren. Eine solche Relativbewegung tritt beispielsweise als Stauchung bzw. Streckung auf, wenn das Gelenkfahrzeug durch eine Mulde bzw. über eine Anhebung fährt.

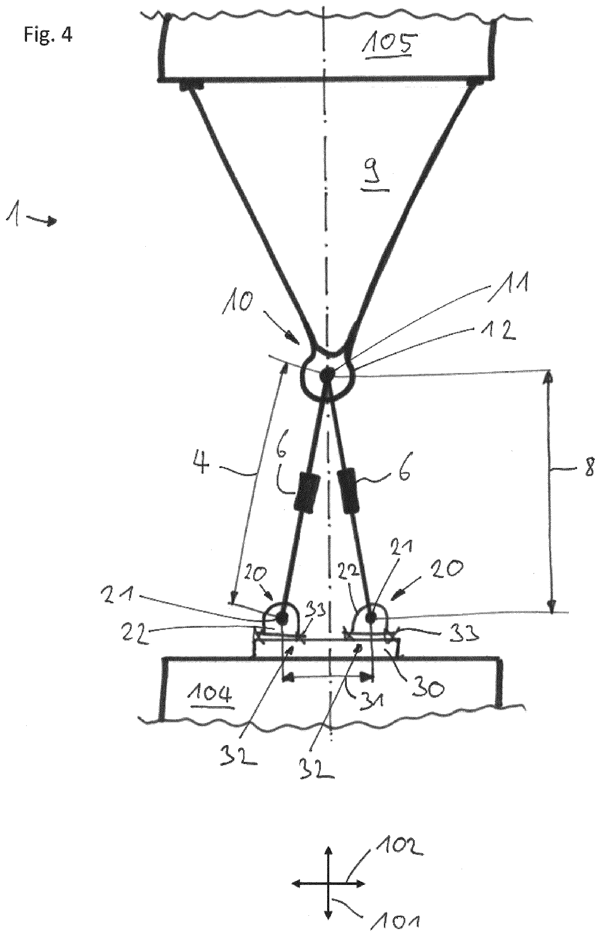

Mithilfe der schematischen Fig. 2 und 4 soll die grundlegende Konstruktion der Gelenkvorrichtung 1 und des Gelenkfahrzeugs 100 nähergebracht werden. Es ist erkennbar, wie die Wagenkästen 105 und 104 im Unterbodenbereich 109 mithilfe der Kupplungsvorrichtung 107 verbunden sind. In einem Dachbereich 110 ist eine Gelenkvorrichtung 1 zwischen den Wagenkästen 104, 105 angeordnet. Die Gelenkvorrichtung weist mindestens ein Zentrallager 10 und zwei Basislager 20 auf. Alle diese Lager, oder auch nur die Basislager 20 können als flexible Festlager, also als Rotationslager mit widerstandsbehafteter Rotationsfähigkeit ausgeführt sein, wobei eine Rotationsachse im Wesentlichen in der Vertikalrichtung 103 ausgerichtet ist.

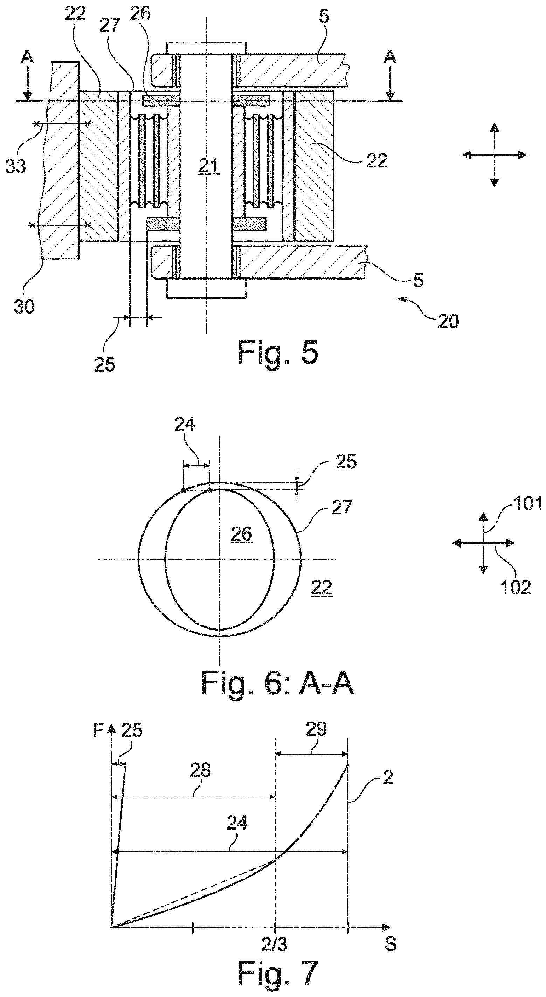

Das Basislager 20 weist einen bolzenähnlichen Lagerabschnitt 21 auf, welcher von flexiblen Abstützmitteln 23 umgeben ist. Ein Stützabschnitt 22 des Basislagers 20 umgreift die Abstützmittel 23 und den Lagerabschnitt 21 (siehe auch Fig. 5). Ein jeder Lagerabschnitt 21 eines Basislagers 20 ist mit einem Schenkel 2 mit dem Zentrallager 10 verbunden. Entsprechend werden die Schenkel 2 an dem Zentrallager 10 zusammengeführt, zum Beispiel indem die Schenkel 2 beide an derselben Schwenkachse 13 eines bolzenähnlichen Lagerabschnitts 11 des Zentrallagers 10 leicht versetzt oder einander umgreifend axial angreifen. Die Schwenkachse 13 des Zentrallagers 10 ist im Wesentlichen identisch mit einer vertikalen Schwenkachse der Verbindungsgelenkvorrichtung 108, wenn die Wagenkästen 104, 105 nicht gegeneinander verschwenkt ausgerichtet sind.

Weiterhin sind die Basislager 20 über die Stützabschnitte 22 mittelbar über eine Basiseinrichtung 30 an dem Wagenkasten 104 oder unmittelbar (nicht gezeigt) direkt an dem Wagenkasten 104 angeordnet. Im letzteren Fall können die Stützabschnitte 22 der Basislager 20 direkt an der Struktur des Wagenkastens 104 befestigt sein, sodass die Basiseinrichtung nicht für sich gegenständlich ausgebildet ist, sondern funktional in der Struktur des Wagenkastens 104 integriert vorliegt.

Die Basislager 20 sind vorzugsweise symmetrisch bezüglich einer Längsachse des Wagenkastens 104 vorgesehen und bilden in Querrichtung 102 einen Basisabstand 31 aus. Dieser beschreibt einen Abstand der Kräftemittelpunkte der Basislager 20.

Der Basisabstand 31 ist mindestens bei der Montage der Gelenkvorrichtung 1 an dem Wagenkasten 104 einstellbar, indem beispielsweise die Basiseinrichtung 30 Befestigungsmittel 33 bereitstellt, die eine variable Anordnung eines Stützabschnitts 22 in Querrichtung 102 am Wagenkasten 104 ermöglichen.

Das Zentrallager 10 ist mithilfe einer Trägervorrichtung 9 an dem Wagenkasten 105 befestigt, sodass die Gelenkvorrichtung 1 zwischen der Trägervorrichtung 9 und der Basiseinrichtung 30 eine Dreieckslenkerverbindung 7 ausbildet.

Weiterhin sind die Schenkel 2 mit einer Einstelleinrichtung 6 ausgestattet, mittels derer eine Schenkellänge 4 eines Schenkels 2 variiert werden kann. Auf diese Weise ist es möglich, Fertigungstoleranzen der Lager 10 und 20, der Basiseinrichtung 30, der Trägervorrichtung 9 und/oder der Wagenkästen 104 und 105 auszugleichen.

Weiterhin kann eine effektive Lenkerlänge 8 der Dreieckslenkerverbindung 7 durch Variation des Basisabstand 31 und/oder der Schenkellänge 4 beeinflusst werden. Auf diese Weise können Toleranzen bei der Verbindung der Wagenkästen 104 und 105 in Längsrichtung 101 ausgeglichen werden.

Fig. 5 zeigt einen Querschnitt durch ein Basislager 20. Ein bolzenförmiger Lagerabschnitt 21 ist mit einer Aufnahme 5 des Schenkels 2 beispielsweise durch Pressung reibschlüssig verbunden. Weiterhin sind zwischen einem ringförmigen Stützabschnitt 22 flexible Abstützmittel 23 vorgesehen, wobei ein Verschwenken von Lagerabschnitt 21 und Stützabschnitt 22 durch Verformung der Abstützmittel 23 begrenzt möglich ist, wozu diese beispielsweise zwischen den Lagerabschnitt 21 und den Stützabschnitt 22 eingepresst vorgesehen sind.

Der Stützabschnitt 22 ist mithilfe von Befestigungsmitteln 33 an der Basiseinrichtung 30 bzw. am Wagenkasten 104 befestigt.

Aus Fig. 5 und Fig. 6 ist ersichtlich, dass sich zwischen dem Lagerabschnitt 21 und dem Stützabschnitt 22 ein erstes in Querrichtung 102 ausgerichtetes Spiel 24 und ein zweites in Längsrichtung 101 ausgerichtetes Spiel 25 einstellen.

Gemäß der Erfindung ist das Basislager 20 wie in Fig. 6 gezeigt so ausgebildet, dass das Spiel 24 in Querrichtung 102 größer ist als das Spiel 25 in Längsrichtung 101. Dies wird durch eine Inkongruenz der Form eines Nockens 26 und eines Anschlags 27 erreicht. In der vorliegenden Erfindung ist der Nocken 26 fest mit dem Lagerabschnitt 21 verbunden und weist in Horizontalrichtung eine ovale Gestalt auf. Durch das Zusammenwirken mit einem runden Anschlag 27 des Stützabschnitts 22 wird der Unterschied des ersten Spiels 24 und dem zweiten Spiel 25 bedingt.

Eine Relativbewegung im Rahmen des ersten Spiels 24 und/oder des zweiten Spiels 25 zwischen Lagerabschnitt 21 und Stützabschnitt 22 kann nur bei Überwindung einer durch die Abstützmittel 23 verursachte Widerstandskraft geschehen. Entsprechend weist das Basislager 20 eine interne Steifigkeit für Relativbewegungen auf. Fig. 7 zeigt einen Kraft-Weg-Verlauf, mit anderen Worten die Steifigkeit, des Basislagers 20 in Querrichtung 102. Eine Verschiebung zwischen dem Lagerabschnitt 21 und dem Stützabschnitt 22 in Querrichtung 102 ist nur im Rahmen des ersten Spiels 24 bzw. in Längsrichtung 101 im Rahmen des zweiten Spiels 25 möglich.

Die Abstützmittel 23 sind so gestaltet, dass in den ersten 2/3 des ersten Spiels 24 ein quasi-linearer Verlauf der Steifigkeit vorhanden ist, wohingegen im letzten Drittel die Steifigkeit bis zum Erreichen des Anschlags 27 zunimmt.

Aus Fig. 7 ist erkennbar, dass die Abstützmittel 23 derart ausgebildet sind, sodass eine Steifigkeit bei der Überwindung des zweiten Spiels 25 in Längsrichtung 101 wesentlich höher als bei Überwindung des ersten Spiels 24 in Querrichtung 102 ist.

In der Zusammenschau mit Fig. 4 wird offensichtlich, dass die vorliegende Konstruktion ermöglicht, dass eine Gesamtsteifigkeit zwischen dem ersten Wagenkasten 104 und dem zweiten Wagenkasten 105 in Längsrichtung 101 wesentlich höher ist als eine Gesamtsteifigkeit am Zentrallager 10 in Querrichtung 102. Eine interne Steifigkeit an einem Basislager 20 in Längsrichtung 101 wird über das Verhältnis der effektiven Lenkerlänge 8 der Dreieckslenkerverbindung 7 zu Basisabstand 31 in eine Gesamtsteifigkeit des Lagerabschnitt 11 des Zentrallagers 10 in Querrichtung 102 übersetzt, und insbesondere wesentlich verringert.

Die ebenfalls schematische Fig. 3 zeigt eine Wankbewegung 106 des Wagenkastens 105 relativ zum Wagenkasten 104. Die Wankbewegung 106 kann aufgrund der relativ geringen Gesamtsteifigkeit des Zentrallagers 10 verhältnismäßig gut kompensiert werden, wodurch verhindert wird, dass die Wankbewegung 106 zum Eintrag übermäßiger Kräfte in die Struktur der Wagenkästen 104 und 105 führt. Gleichzeitig wird eine verhältnismäßig hohe Steifigkeit in Längsrichtung 101 beibehalten.

Wenngleich hierin spezifische Ausführungsformen dargestellt und beschrieben worden sind, liegt es im Rahmen der vorliegenden Erfindung, die gezeigten Ausführungsformen geeignet zu modifizieren, ohne vom durch die nachfolgenden Ansprüche definierten Schutzbereich der vorliegenden Erfindung abzuweichen, wobei in diesem Kontext beispielsweise denkbar ist, dass nicht nur die Basislager 20 gemäß Fig. 5 und/oder Fig. 6 ausgebildet sind, sondern eine solche Gestalt auch für das Zentrallager 10 vorgesehen ist.

### Bezugszeichenliste

- 1: Gelenkvorrichtung
- 2: Schenkel
- 3: Schenkelrichtung
- 4: Schenkellänge
- 5: Aufnahme
- 6: Einstelleinrichtung
- 7: Dreieckslenkerverbindung
- 8: Lenkerlänge
- 9: Trägervorrichtung
- 10: Zentrallager
- 11: Lagerabschnitt
- 12: Stützabschnitt
- 13: Schwenkachse

- 20: Basislager
- 21: Lagerabschnitt
- 22: Stützabschnitt
- 23: flexible Abstützmittel
- 24: erstes Spiel
- 25: zweites Spiel
- 26: Nocken
- 27: Anschlag
- 28: quasi-linearer Bereich
- 29: progressiver Bereich
- 30: Basiseinrichtung
- 31: Basisabstand
- 32: Basiseinstelleinrichtung
- 33: Befestigungsmitteln

- 100: Gelenkfahrzeug
- 101: Längsrichtung
- 102: Querrichtung
- 103: Vertikalrichtung
- 104: erster Wagenkasten
- 105: zweiter Wagenkasten
- 106: Wankbewegung
- 107: Kupplungsvorrichtung
- 108: Verbindungsgelenkvorrichtung
- 109: Unterbodenbereich
- 110: Dachbereich
- 111: Schiene
- 112: Drehgestell
- 113: Nicklagervorrichtung
- 200: Gelenkfahrzeug

## Patentansprüche

1. Gelenkvorrichtung (1) zum flexiblen Verbinden eines ersten Wagenkastens (104) und eines zweiten Wagenkastens (105) eines Gelenkfahrzeugs (100), aufweisend
- ein Zentrallager (10) mit einem Lagerabschnitt (11) und einem an dem ersten Wagenkasten (104) befestigbaren Stützabschnitt (12),
- zwei Basislager (20) jeweils mit einem Lagerabschnitt (21) und einem Stützabschnitt (22), wobei die Basislager (20) jeweils mittels des Stützabschnitts (22) in einer ersten Richtung über eine Basiseinrichtung (30) mit einem Basisabstand (31) zueinander beabstandet am zweiten Wagenkasten (105) befestigbar ausgebildet sind, und
- zwei Schenkel (2), jeweils ausgebildet zum Herstellen einer mechanischen Dreieckslenkerverbindung zwischen dem Lagerabschnitt (11) des Zentrallagers (10) und den Lagerabschnitten (21) der Basislager (20),
- **dadurch gekennzeichnet, dass**
- mindestens ein Basislager (20) oder die Basislager (20) flexible Abstützmittel derart aufweisen, sodass eine interne Steifigkeit eines Basislagers (20) in mindestens einer Schenkelrichtung (3) des zum Basislager (20) zugehörigen Schenkels (2) zumindest in einem quasi-linearen Steifigkeitsbereich (28) mindestens 2 kN/mm, insbesondere mindestens 3 kN/mm, bevorzugt mindestens 4 kN/mm und maximal 7 kN/mm, insbesondere maximal 6 kN/mm, bevorzugt maximal 5 kN/mm beträgt,
- und/oder wobei mindestens ein Basislager (20) oder die Basislager (20) flexible Abstützmittel , jeweils angeordnet zwischen dem Lagerabschnitt (21) und dem Stützabschnitt (22), derart aufweisen, und eine Schenkellänge (4) mindestens eines Schenkels (2) oder beider Schenkel (2) derart ausgebildet ist, sodass eine interne Steifigkeit eines Basislagers (20) in mindestens einer Schenkelrichtung (3) des zum Basislager (20) zugehörigen Schenkels (2) zumindest in einem quasi-linearen Steifigkeitsbereich (28) mindestens 4 N/mm, insbesondere mindestens 6 N/mm, bevorzugt 8 N/mm, pro einem Millimeter Schenkellänge (4), und maximal 20 N/mm, insbesondere 18 N/mm, bevorzugt 16 N/mm, pro einem Millimeter Schenkellänge (4) beträgt,
- wobei der Lagerabschnitt (21) mindestens eines Basislagers (20) oder der Basislager (20) fest mit einem Nocken (26) verbunden ist, wobei der Nocken (26) in Horizontalrichtung eine ovale Gestalt aufweist, wobei der Stützabschnitt (22) des mindestens einen Basislager (20) oder der Basislager (20) einen runden Anschlag (27) aufweist, so dass durch das Zusammenwirken des runden Anschlages (27) des Stützabschnittes (22) und des ovalen Nockens (26) des Lagerabschnittes ein Spiel (24) in Querrichtung (102) größer ist als ein Spiel (25) in Längsrichtung.

2. Gelenkvorrichtung (1) zum flexiblen Verbinden eines ersten Wagenkastens (104) und eines zweiten Wagenkastens (105) eines Gelenkfahrzeugs (100), aufweisend
- ein Zentrallager (10) mit einem Lagerabschnitt (11) und einem an dem ersten Wagenkasten (104) befestigbaren Stützabschnitt (12),
- zwei Basislager (20) jeweils mit einem Lagerabschnitt (21) und einem Stützabschnitt (22),
- eine Basiseinrichtung (30), wobei die Basislager (20) jeweils mittels des Stützabschnitts (22) in einer ersten Richtung an der Basiseinrichtung (30) mit einem Basisabstand (31) zueinander beabstandet angeordnet sind und am zweiten Wagenkasten (105) befestigbar ausgebildet sind,
- zwei Schenkel (2), jeweils ausgebildet zum Herstellen einer mechanischen Dreieckslenkerverbindung zwischen dem Lagerabschnitt (11) des Zentrallagers (10) und den Lagerabschnitten (21) der Basislager (20),
- **dadurch gekennzeichnet, dass**
- der Basisabstand (31), eine effektive Lenkerlänge (8) zwischen Zentrallager (10) und dem Basislager (20) entlang der Längsrichtung (101), und/oder Abstützmittel eines oder mehrerer Lager (10, 20) derart ausgewählt sind, dass eine Gesamtsteifigkeit zwischen dem Lagerabschnitts (11) des Zentrallagers (10) und einem Stützabschnitt (22) eines Basislagers in Querrichtung (102) maximal 30%, insbesondere maximal 20%, bevorzugt maximal 12% einer internen Steifigkeit eines der Basislager (20) und/oder mindestens 300 N/mm, insbesondere mindestens 400 N/mm, bevorzugt mindestens 480 N/mm und maximal 700N/mm, insbesondere maximal 600 N/mm, bevorzugt maximal 520 N/mm beträgt,
- und/oder wobei ein Verhältnis von Lenkerlänge (8) zu Basisabstands (31) mindestens 4:1, insbesondere mindestens 5:1, bevorzugt mindestens 6:1, und maximal 12:1, insbesondere maximal 10:1, bevorzugt maximal 8:1, beträgt,
- wobei der Lagerabschnitt (21) mindestens eines Basislagers (20) oder der Basislager (20) fest mit einem Nocken (26) verbunden ist, wobei der Nocken (26) in Horizontalrichtung eine ovale Gestalt aufweist, wobei der Stützabschnitt (22) des mindestens einen Basislager (20) oder der Basislager (20) einen runden Anschlag (27) aufweist, so dass durch das Zusammenwirken des runden Anschlages (27) des Stützabschnittes (22) und des ovalen Nockens (26) des Lagerabschnittes ein Spiel (24) in Querrichtung (102) größer ist als ein Spiel (25) in Längsrichtung.

3. Gelenkvorrichtung (1) nach Anspruch 1 oder 2, wobei mindestens ein Schenkel (2), die Schenkel (2), das Zentrallager (10), mindestens ein Basislager (20) und/oder die Basislager (20) derart ausgebildet ist/sind, dass bei einem montierten Schenkel (2) eine effektive Lenkerlänge (8) zwischen Zentrallager (10) und dem Basisabstand (31) und/oder eine effektive Schenkellänge (4) einstellbar ist.

4. Gelenkvorrichtung (1) nach Anspruch 1 oder 3, wobei ein Schenkel (2), insbesondere die Schenkel (2), jeweils eine Einstelleinrichtung (6) mit in einer Schenkelrichtung (5) eines jeweiligen Schenkels (2) ausgerichteten Gewindemitteln zum Einstellen der Lenkerlänge (4) aufweist/aufweisen.

5. Gelenkvorrichtung (1) nach einem der voranstehenden Ansprüche, wobei mindestens ein Basislager (20) oder die Basislager (20) derart ausgebildet sind, sodass dessen oder deren interne Steifigkeit in mindestens einer Schenkelrichtung (3) des zum Basislager (20) zugehörigen Schenkels (2) ab einer bestimmten Relativverschiebung, insbesondere ab 2/3 eines Gesamtspiels eines Basislagers (20), progressiv zunimmt.

6. Gelenkvorrichtung (1) nach einem der voranstehenden Ansprüche, wobei die Schenkel (2) hinsichtlich ihrer Schenkellängen (4) gleich lang ausgebildet sind.

7. Gelenkvorrichtung (1) nach einem der voranstehenden Ansprüche, wobei Basiseinstelleinrichtung (32) vorgesehen ist, sodass eine Montageposition eines Basislagers (20) am zweiten Wagenkasten (105) in Querrichtung (102) und/oder der Basisabstand (31) einstellbar ist/sind.

8. Gelenkvorrichtung (1) nach einem der voranstehenden Ansprüche, wobei das Zentrallager (10) flexible Abstützmittel angeordnet zwischen dem Lagerabschnitt (11) und dem Stützabschnitt (12) derart aufweist, sodass eine interne Steifigkeit des Zentrallagers (10) in mindestens der ersten Richtung, insbesondere in Querrichtung (102), zumindest in einem quasi-linearen Steifigkeitsbereich (28) mindestens 2 kN/mm, insbesondere mindestens 3 kN/mm, bevorzugt mindestens 4 kN/mm und maximal 7 kN/mm, insbesondere maximal 6 kN/mm, bevorzugt maximal 5 kN/mm beträgt.

9. Gelenkvorrichtung (1) nach einem der voranstehenden Ansprüche, wobei das Zentrallager (10) flexible Abstützmittel angeordnet zwischen dem Lagerabschnitt (11) und dem Stützabschnitt (12) derart aufweist, sodass eine interne Steifigkeit des Zentrallagers (10) mindestens in einer zweiten Richtung, insbesondere in Längsrichtung (101), zumindest in einem quasi-linearen Steifigkeitsbereich (28) mindestens 12 kN/mm, insbesondere mindestens 15 kN/mm, bevorzugt mindestens 17 kN/mm beträgt.

10. Gelenkvorrichtung (1) nach einem der voranstehenden Ansprüche, wobei das Zentrallager (10) als Kugelgelenklager ausgebildet ist.

11. Gelenkvorrichtung (1) nach einem der voranstehenden Ansprüche, wobei mindestens ein Basislager (20), insbesondere die Basislager (20), und/oder das Zentrallager (10) derart ausgebildet sind, sodass eine interne Steifigkeit des jeweiligen Lagers (10, 20) zumindest in einem quasi-linearen Steifigkeitsbereich (28) in der ersten Richtung, insbesondere in Längsrichtung (101) oder in Schenkelrichtung (3), verschieden von einer interne Steifigkeit in der zweiten Richtung, insbesondere in Querrichtung (102), ist.

12. Gelenkvorrichtung (1) nach einem der voranstehenden Ansprüche, wobei mindestens ein Basislager (20), insbesondere die Basislager (20), und/oder das Zentrallager (10) derart ausgebildet ist/sind, sodass Lagerabschnitt (11, 21) und Stützabschnitt (12, 22) im Rahmen eines Spiels (24, 25), insbesondere unter Überwindung einer durch flexible Abstützmittel bereitgestellte Widerstandskraft, zueinander bewegbar sind, wobei das Spiel (24, 25) mindestens 0,5 mm, insbesondere mindestens 1 mm, bevorzugt mindestens 1,5 mm, und maximal 6 mm, insbesondere maximal 5 mm, bevorzugt maximal 4 mm beträgt.

13. Gelenkvorrichtung (1) nach Anspruch 12, wobei das Zentrallager (10) derart ausgebildet ist,
- dass ein erstes Spiel (24) in der ersten Richtung, insbesondere in Querrichtung (102), und ein zweites Spiel (25) in der zweiten Richtung, insbesondere in Längsrichtung (101), unterschiedliche Beträge aufweisen,
und/oder wobei mindestens ein Basislager (20), die Basislager (20), und/oder das Zentrallager (10) derart ausgebildet ist/sind,
- dass ein erstes Spiel (24) in der ersten Richtung, insbesondere in Querrichtung (102), mindestens 0,5 mm, insbesondere mindestens 1 mm, bevorzugt mindestens 1,5 mm, und maximal 6 mm, insbesondere maximal 5 mm, bevorzugt maximal 4 mm beträgt, und/oder
- dass ein zweites Spiel (25) in der zweiten Richtung, insbesondere in Längsrichtung (101), mindestens 0,75 mm, insbesondere mindestens 1 mm, bevorzugt mindestens 1,25 mm, und maximal 2,25 mm, insbesondere maximal 2 mm, bevorzugt maximal 1,75 mm beträgt.

14. Gelenkfahrzeug (100) mit einem ersten Wagenkasten (104), einem zweiten Wagenkasten (105) und einer die Wagenkästen (104, 105) flexibel verbindenden Gelenkvorrichtung (1) nach einem der voranstehenden Ansprüche.

15. Gelenkfahrzeugs (100) nach Anspruch 14, wobei die Dreieckslenkerverbindung, die Basislager (20) und das Zentrallager (10) derart ausgebildet sind, sodass die Gelenkvorrichtung (1) zwischen den Wagenkästen (104, 105) in Längsrichtung (101) ein Gesamtspiel von mindestens 1,25mm, insbesondere mindestens 1,5 mm, bevorzugt mindestens 2 mm, und maximal 8,25 mm, insbesondere maximal 6 mm, bevorzugt maximal 4,75 mm beträgt.

## Claims

1. Articulation device (1) for flexibly connecting a first car body (104) and a second car body (105) of an articulated vehicle (100), comprising
- a central bearing (10) with a bearing portion (11) and a support portion (12) attachable to the first car body (104),
- two base bearings (20), each with a bearing portion (21) and a support portion (22), wherein the base bearings (20) are each configured to be fastened to the second car body (105) by means of the support portion (22) in a first direction via a base arrangement (30) with a base distance (31) spaced apart from one another, and
- two legs (2), each configured to generate a mechanical wishbone connection between the bearing portion (11) of the central bearing (10) and the bearing portions (21) of the base bearings (20),
**characterised in that**
- at least one base bearing (20) or the base bearings (20) comprise flexible support means such that an internal stiffness of a base bearing (20) in at least one leg direction (3) of the leg (2) associated with the base bearing (20) is, at least in a quasi-linear stiffness range (28), at least 2 kN/mm, in particular at least 3 kN/mm, preferably at least 4 kN/mm and at most 7 kN/mm, in particular at most 6 kN/mm, preferably at most 5 kN/mm,
- and/or wherein at least one base bearing (20) or the base bearings (20) comprise flexible support means, each arranged between the bearing portion (21) and the support portion (22), in such a way, and a leg length (4) of at least one leg (2) or both legs (2) is configured such that an internal stiffness of one base bearing (20) in at least one leg direction (3) of the leg (2) associated with the base bearing (20) is, at least in a quasi-linear stiffness range (28), at least 4 N/mm, in particular at least 6 N/mm, preferably 8 N/mm, per millimeter leg length (4), and at most 20 N/mm, in particular 18 N/mm, preferably 16 N/mm, per millimeter leg length (4),
- wherein the bearing portion (21) of at least one base bearing (20) or the base bearings (20) is firmly connected to a cam (26), wherein the cam (26) has an oval shape in the horizontal direction, wherein the support portion (22) of the at least one base bearing (20) or the base bearings (20) has a round stop (27), so that, due to the interaction of the round stop (27) of the support portion (22) and the oval cam (26) of the bearing portion, a clearance (24) in the transverse direction (102) is greater than a clearance (25) in the longitudinal direction.

2. Articulation device (1) for flexibly connecting a first car body (104) and a second car body (105) of an articulated vehicle (100), comprising
- a central bearing (10) with a bearing portion (11) and a support portion (12) attachable to the first car body (104),
- two base bearings (20), each with a bearing portion (21) and a support portion (22),
- a base arrangement (30), wherein the base bearings (20) are each arranged spaced apart from each other by means of the support portion (22) in a first direction on the base arrangement (30) with a base distance (31) and are configured to be fastened to the second car body (105),
- two legs (2), each configured to generate a mechanical wishbone connection between the bearing portion (11) of the central bearing (10) and the bearing portions (21) of the base bearings (20),
**characterised in that**
- the base distance (31), an effective wishbone length (8) between central bearing (10) and the base bearing (20) along the longitudinal direction (101), and/or support means of one or more bearings (10, 20) are selected such that a total stiffness between the bearing portion (11) of the central bearing (10) and a support portion (22) of a base bearing in the transverse direction (102) is at most 30%, in particular at most 20%, preferably at most 12%, of an internal stiffness of one of the base bearings (20) and/or at least 300 N/mm, in particular at least 400 N/mm, preferably at least 480 N/mm and at most 700 N/mm, in particular at most 600 N/mm, preferably at most 520 N/mm,
- and/or wherein a ratio of wishbone length (8) to base distance (31) is at least 4:1, particularly at least 5:1, preferably at least 6:1, and at most 12:1, particularly at most 10:1, preferably at most 8:1,
- wherein the bearing portion (21) of at least one base bearing (20) or the base bearings (20) is firmly connected to a cam (26), wherein the cam (26) has an oval shape in the horizontal direction, wherein the support portion (22) of the at least one base bearing (20) or the base bearings (20) has a round stop (27), so that, due to the interaction of the round stop (27) of the support portion (22) and the oval cam (26) of the bearing portion, a clearance (24) in the transverse direction (102) is greater than a clearance (25) in the longitudinal direction.

3. Articulation device (1) of claim 1 or 2, wherein at least one leg (2), the legs (2), the central bearing (10), at least one base bearing (20) and/or the base bearings (20) is/are configured such that, when a leg (2) is mounted, an effective wishbone length (8) between central bearing (10) and the base distance (31) and/or an effective leg length (4) is adjustable.

4. Articulation device (1) of claim 1 or 3, wherein a leg (2), in particular the legs (2), each has an adjusting device (6) with threading means aligned in a leg direction (5) of a respective leg (2) for adjusting the wishbone length (4).

5. Articulation device (1) of one of the preceding claims, wherein at least one base bearing (20) or the base bearings (20) are configured such that its or their internal stiffness in at least one leg direction (3) of the leg (2) associated with the base bearing (20) progressively increases from a certain relative displacement, in particular from 2/3 of a total clearance of a base bearing (20).

6. Articulation device (1) of one of the preceding claims, wherein the legs (2) are configured to be of equal length with respect to their leg lengths (4).

7. Articulation device (1) of one of the preceding claims, wherein base adjusting device (32) is provided such that a mounting position of a base bearing (20) at the second car body (105) in the transverse direction (102) and/or the base distance (31) is/are adjustable.

8. Articulation device (1) of one of the preceding claims, wherein the central bearing (10) comprises flexible support means arranged between the bearing portion (11) and the support portion (12) such that an internal stiffness of the central bearing (10) in at least the first direction, in particular in the transverse direction (102), is, in at least a quasi-linear stiffness range (28), at least 2 kN/mm, in particular at least 3 kN/mm, preferably at least 4 kN/mm, and at most 7 kN/mm, in particular at most 6 kN/mm, preferably at most 5 kN/mm.

9. Articulation device (1) of one of the preceding claims, wherein the central bearing (10) comprises flexible support means arranged between the bearing portion (11) and the support portion (12) such that an internal stiffness of the central bearing (10) in at least a second direction, in particular in longitudinal direction (101), is, in at least a quasi-linear stiffness range (28), at least 12 kN/mm, in particular at least 15 kN/mm, preferably at least 17 kN/mm.

10. Articulation device (1) of one of the preceding claims, wherein the central bearing (10) is configured as a ball joint bearing.

11. Articulation device (1) of one of the preceding claims, wherein at least one base bearing (20), in particular the base bearings (20), and/or the central bearing (10) are configured such that an internal stiffness of the respective bearing (10, 20) is, at least in a quasi-linear stiffness range (28), in the first direction, in particular in longitudinal direction (101) or in leg direction (3), different from an internal stiffness in the second direction, in particular in transverse direction (102).

12. Articulation device (1) of one of the preceding claims, wherein at least one base bearing (20), in particular the base bearings (20), and/or the central bearing (10) is/are configured such that bearing portion (11, 21) and support portion (12, 22) are movable with respect to each other within the scope of a clearance (24, 25), in particular by overcoming a resistance force provided by flexible support means, wherein the clearance (24, 25) is at least 0,5 mm, in particular at least 1 mm, preferably at least 1,5 mm, and at most 6 mm, in particular at most 5 mm, preferably at most 4 mm.

13. Articulation device (1) of claim 12, wherein the central bearing (10) is configured such
- that a first clearance (24) in the first direction, in particular in transverse direction (102), and a second clearance (25) in the second direction, in particular in longitudinal direction (101), comprise different amounts,
and/or wherein at least one base bearing (20), the base bearings (20), and/or the central bearing (10) is/are configured such
- that a first clearance (24) in the first direction, in particular in transverse direction (102), is at least 0,5 mm, in particular at least 1 mm, preferably at least 1,5 mm, and at most 6 mm, in particular at most 5 mm, preferably at most 4 mm, and/or
- that a second clearance (25) in the second direction, in particular in longitudinal direction (101), is at least 0,75 mm, in particular at least 1 mm, preferably at least 1,25 mm, and at most 2,25 mm, in particular at most 2 mm, preferably at most 1,75 mm.

14. An articulated vehicle (100) with a first car body (104), a second car body (105) and an articulation device (1) according to one of the preceding claims flexibly connecting the car bodies (104, 105).

15. Articulated vehicle (100) of claim 14, wherein the wishbone connection, the base bearings (20) and the central bearing (10) are configured such that the articulation device (1) between the car bodies (104, 105) in longitudinal direction (101) has a total clearance of at least 1,25 mm, in particular at least 1,5 mm, preferably at least 2 mm, and at most 8,25 mm, in particular at most 6 mm, preferably at most 4,75 mm.

## Revendications

1. Dispositif d'articulation (1) pour relier de manière flexible une première caisse de voiture (104) et une deuxième caisse de voiture (105) d'un véhicule articulé (100), présentant
- un palier central (10) comportant une section de palier (11) et une section de support (12) apte à être fixée à la première caisse de voiture (104),
- deux paliers de base (20) comportant respectivement une section de palier (21) et une section de support (22), dans lequel les paliers de base (20) sont configurés de manière à pouvoir être fixés à la deuxième caisse de voiture (105) à distance l'un de l'autre avec une distance entre bases (31) respectivement au moyen de la section de support (22) dans une première direction par l'intermédiaire d'un dispositif de base (30), et
- deux branches (2), respectivement configurées pour établir une liaison à bras de suspension triangulaire mécanique entre la section de palier (11) du palier central (10) et les sections de paliers (21) des paliers de base (20),
- **caractérisé en ce que**
- au moins un palier de base (20) ou les paliers de base (20) présentent des moyens de soutien flexibles de telle sorte qu'une rigidité interne d'un palier de base (20) dans au moins une direction de branche (3) de la branche (2) associée au palier de base (20) est, au moins dans une zone de rigidité quasi-linéaire (28), d'au moins 2 kN/mm, en particulier d'au moins 3 kN/mm, de préférence d'au moins 4 kN/mm et au maximum de 7 kN/mm, en particulier au maximum de 6 kN/mm, de préférence au maximum de 5 kN/mm,
- et/ou dans lequel au moins un palier de base (20) ou les paliers de base (20) présentent des moyens de soutien flexibles, respectivement disposés entre la section de palier (21) et la section de support (22) de telle sorte que, et une longueur de branche (4) d'au moins une branche (2) ou des deux branches (2) est configurée de telle sorte qu'une rigidité interne d'un palier de base (20) dans au moins une direction de branche (3) de la branche (2) associée au palier de base (20) est, au moins dans une zone de rigidité quasi-linéaire (28), d'au moins 4 N/mm, en particulier d'au moins 6 N/mm, de préférence de 8 N/mm, par millimètre de longueur de branche (4), et au maximum de 20 N/mm, en particulier de 18 N/mm, de préférence de 16 N/mm, par millimètre de longueur de branche (4),
- dans lequel la section de palier (21) d'au moins un palier de base (20) ou des paliers de base (20) est reliée de manière fixe à une came (26), dans lequel la came (26) présente une forme ovale dans la direction horizontale, dans lequel la section de support (22) de l'au moins un palier de base (20) ou des paliers de base (20) présente une butée ronde (27), de sorte que, par la coopération de la butée ronde (27) de la section de support (22) et de la came (26) ovale de la section de palier, un jeu (24) dans la direction transversale (102) est supérieur à un jeu (25) dans la direction longitudinale.

2. Dispositif d'articulation (1) permettant de relier de manière flexible une première caisse de voiture (104) et une deuxième caisse de voiture (105) d'un véhicule articulé (100), présentant
- un palier central (10) comportant une section de palier (11) et une section de support (12) apte à être fixée à la première caisse de voiture (104),
- deux paliers de base (20) comportant respectivement une section de palier (21) et une section de support (22),
- un dispositif de base (30), dans lequel les paliers de base (20) sont disposés sur le dispositif de base (30) à distance l'un de l'autre avec une distance entre bases (31) respectivement au moyen de la section de support (22) dans une première direction et sont configurés de manière à pouvoir être fixés à la deuxième caisse de voiture (105),
- deux branches (2), respectivement configurées pour établir une liaison à bras de suspension triangulaire mécanique entre la section de palier (11) du palier central (10) et les sections de paliers (21) des paliers de base (20),
- **caractérisé en ce que**
- la distance entre bases (31), une longueur de bras de suspension (8) effective entre le palier central (10) et le palier de base (20) le long de la direction longitudinale (101), et/ou des moyens de soutien d'un ou de plusieurs paliers (10, 20) sont choisis de telle sorte qu'une rigidité totale entre la section de palier (11) du palier central (10) et une section de support (22) d'un palier de base dans la direction transversale (102) est au maximum 30 %, en particulier au maximum 20 %, de préférence au maximum 12 % d'une rigidité interne de l'un des paliers de base (20) et/ou est d'au moins 300 N/mm, en particulier d'au moins 400 N/mm, de préférence d'au moins 480 N/mm et au maximum de 700 N/mm, en particulier au maximum de 600 N/mm, de préférence au maximum de 520 N/mm,
- et/ou dans lequel un rapport de la longueur de bras de suspension (8) à la distance entre bases (31) est d'au moins 4:1, en particulier d'au moins 5:1, de préférence d'au moins 6:1, et au maximum de 12:1, en particulier au maximum de 10:1, de préférence au maximum de 8:1,
- dans lequel la section de palier (21) d'au moins un palier de base (20) ou des paliers de base (20) est reliée de manière fixe à une came (26), dans lequel la came (26) présente une forme ovale dans la direction horizontale, dans lequel la section de support (22) de l'au moins un palier de base (20) ou des paliers de base (20) présente une butée ronde (27), de sorte que, par la coopération de la butée ronde (27) de la section de support (22) et de la came (26) ovale de la section de palier, un jeu (24) dans la direction transversale (102) est supérieur à un jeu (25) dans la direction longitudinale.

3. Dispositif d'articulation (1) selon la revendication 1 ou 2, dans lequel au moins une branche (2), les branches (2), le palier central (10), au moins un palier de base (20) et/ou les paliers de base (20) sont configurés de telle sorte que, lorsqu'une branche (2) est montée, une longueur de bras de suspension (8) effective entre le palier central (10) et la distance entre bases (31) et/ou une longueur de branche (4) effective sont réglables.

4. Dispositif d'articulation (1) selon la revendication 1 ou 3, dans lequel une branche (2), en particulier les branches (2), présentent respectivement un dispositif de réglage (6) comportant des moyens filetés orientés dans une direction de branche (5) d'une branche (2) respective et permettant de régler la longueur de bras de suspension (4).

5. Dispositif d'articulation (1) selon l'une des revendications précédentes, dans lequel au moins un palier de base (20) ou les paliers de base (20) sont configurés de telle sorte que leur rigidité interne augmente progressivement dans au moins une direction de branche (3) de la branche (2) associée au palier de base (20) à partir d'un déplacement relatif déterminé, en particulier à partir de 2/3 d'un jeu total d'un palier de base (20).

6. Dispositif d'articulation (1) selon l'une des revendications précédentes, dans lequel les branches (2) sont configurées avec la même longueur en ce qui concerne leurs longueurs de branches (4).

7. Dispositif d'articulation (1) selon l'une des revendications précédentes, dans lequel un dispositif de réglage de bases (32) est prévu, de sorte qu'une position de montage d'un palier de base (20) sur la deuxième caisse de voiture (105) dans la direction transversale (102) et/ou la distance entre bases (31) sont réglables.

8. Dispositif d'articulation (1) selon l'une des revendications précédentes, dans lequel le palier central (10) présente des moyens de soutien flexibles disposés entre la section de palier (11) et la section de support (12) de telle sorte qu'une rigidité interne du palier central (10) dans au moins la première direction, en particulier dans la direction transversale (102), au moins dans une zone de rigidité quasi-linéaire (28), est d'au moins 2 kN/mm, en particulier d'au moins 3 kN/mm, de préférence d'au moins 4 kN/mm et au maximum de 7 kN/mm, en particulier au maximum de 6 kN/mm, de préférence au maximum de 5 kN/mm.

9. Dispositif d'articulation (1) selon l'une des revendications précédentes, dans lequel le palier central (10) présente des moyens de soutien flexibles disposés entre la section de palier (11) et la section de support (12) de telle sorte qu'une rigidité interne du palier central (10) au moins dans une deuxième direction, en particulier dans la direction longitudinale (101), au moins dans une zone de rigidité quasi-linéaire (28), est d'au moins 12 kN/mm, en particulier d'au moins 15 kN/mm, de préférence d'au moins 17 kN/mm.

10. Dispositif d'articulation (1) selon l'une des revendications précédentes, dans lequel le palier central (10) est configuré comme un palier à rotule.

11. Dispositif d'articulation (1) selon l'une des revendications précédentes, dans lequel au moins un palier de base (20), en particulier les paliers de base (20), et/ou le palier central (10) sont configurés de telle sorte qu'une rigidité interne du palier (10, 20) respectif, au moins dans une zone de rigidité quasi-linéaire (28) dans la première direction, en particulier dans la direction longitudinale (101) ou dans une direction de branche (3), est différente d'une rigidité interne dans la deuxième direction, en particulier dans la direction transversale (102).

12. Dispositif d'articulation (1) selon l'une des revendications précédentes, dans lequel au moins un palier de base (20), en particulier les paliers de base (20), et/ou le palier central (10) sont configurés de telle sorte que la section de palier (11, 21) et la section de support (12, 22) peuvent être déplacées l'une par rapport à l'autre dans le cadre d'un jeu (24, 25), en particulier en surmontant une force de résistance fournie par des moyens de soutien flexibles, dans lequel le jeu (24, 25) est d'au moins 0,5 mm, en particulier d'au moins 1 mm, de préférence d'au moins 1,5 mm, et au maximum de 6 mm, en particulier au maximum de 5 mm, de préférence au maximum de 4 mm.

13. Dispositif d'articulation (1) selon la revendication 12, dans lequel le palier central (10) est configuré de telle sorte
- qu'un premier jeu (24) dans la première direction, en particulier dans la direction transversale (102), et un second jeu (25) dans la deuxième direction, en particulier dans la direction longitudinale (101), présentent des valeurs différentes, et/ou dans lequel au moins un palier de base (20), les paliers de base (20), et/ou le palier central (10) sont configurés de telle sorte
- qu'un premier jeu (24) dans la première direction, en particulier dans la direction transversale (102), est d'au moins 0,5 mm, en particulier d'au moins 1 mm, de préférence d'au moins 1,5 mm, et au maximum de 6 mm, en particulier au maximum de 5 mm, de préférence au maximum de 4 mm, et/ou
- qu'un second jeu (25) dans la deuxième direction, en particulier dans la direction longitudinale (101), est d'au moins 0,75 mm, en particulier d'au moins 1 mm, de préférence d'au moins 1,25 mm, et au maximum de 2,25 mm, en particulier au maximum de 2 mm, de préférence au maximum de 1,75 mm.

14. Véhicule articulé (100) comportant une première caisse de voiture (104), une deuxième caisse de voiture (105) et un dispositif d'articulation (1) selon l'une des revendications précédentes reliant de manière flexible les caisses de voiture (104, 105).

15. Véhicule articulé (100) selon la revendication 14, dans lequel la liaison à bras de suspension triangulaire, les paliers de base (20) et le palier central (10) sont configurés de telle sorte que le dispositif d'articulation (1) entre les caisses de voiture (104, 105) présente, dans la direction longitudinale (101), un jeu total d'au moins 1,25 mm, en particulier d'au moins 1,5 mm, de préférence d'au moins 2 mm, et au maximum de 8,25 mm, en particulier au maximum de 6 mm, de préférence au maximum de 4,75 mm.
